(19) Europäisches Patentamt
European Patent Office
Office européen des brevets

(11) EP 1 483 965 A1

(12) EUROPEAN PATENT APPLICATION
published in accordance with Art. 158(3) EPC

(43) Date of publication:
**08.12.2004 Bulletin 2004/50**

(21) Application number: **03737504.5**

(22) Date of filing: **07.02.2003**

(51) Int Cl.[7]: **A01N 25/18**, A01N 35/00

(86) International application number:
**PCT/JP2003/001302**

(87) International publication number:
**WO 2003/065804 (14.08.2003 Gazette 2003/33)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **07.02.2002 JP 2002031409**
**12.02.2002 JP 2002034625**

(71) Applicant: **Kuraray Co., Ltd.**
**Kurashiki-City, Okayama 710-8622 (JP)**

(72) Inventors:
- **HINO, Kenichi,**
  **c/o KURARAY FAMILY PRODUCT CO.,LTD.**
  **Osaka-shi, Osaka 530-8611 (JP)**
- **SHIMAMURA, Michiya, c/o KURARAY CO., LTD.**
  **Kurashiki-shi, Okayama 710-0801 (JP)**

(74) Representative:
**von Kreisler, Alek, Dipl.-Chem. et al**
**Deichmannhaus am Dom,**
**Postfach 10 22 41**
**50462 Köln (DE)**

# (54) METHOD OF CONTROLLING PESTS AND PEST CONTROL AGENT

(57) A method for controlling pests, which includes allowing a gaseous compound having the formula (I)

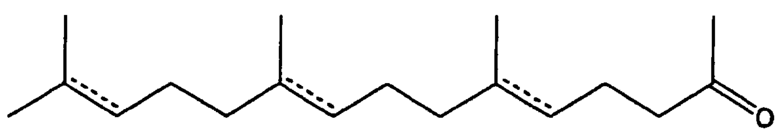

(I)

wherein -------- is a single bond or a double bond, to be present at a concentration of 0.001-20,000 μg/L in a space where pest repellence is intended, and a pest control agent containing the compound having the formula (I) as an active ingredient are provided.

EP 1 483 965 A1

## Description

### Technical Field

The present invention relates to a method of controlling pests, which comprises filling a space where the presence of pests is not intended with a vapor of a compound having the following formula (I):

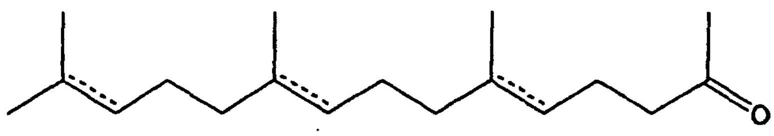

(I)

wherein --------- is a single bond or a double bond, at a particular concentration for a long time, thereby creating an environment pests do not like, which presses the pests to leave the space and simultaneously prevents new invasion, an apparatus to be used therefor, and a pest control agent containing the compound.

### Background Art

Pests are well known to cause damage to agricultural products, give uncomfortable feeling and blood-sucking damage to human, mediate severe diseases such as Japanese B encephalitis, malaria, dysentery, plague and the like, and mediate diseases in livestock. Recent increase in the amount of food import and globalization of plane passengers have increased the danger of pest invasion. Combined with the global warming and higher average temperature in houses, it is considered that the pests can pass the winter. Furthermore, the possibility is becoming higher that pests of agricultural products specific to a particular area are transmitted to different areas, and that tropical pests such as malaria mosquitoes, West Nile fever mosquitoes etc. come on shore of temperate regions. In regards to the pests of domestic species, moreover, the ability to naturally balance the numbers of individual pests by food chain in nature has been lost due to the conventional pesticided control, and as the trend in these days towards low levels of pesticides used and no pesticide prevails into the field of insect repellents for home use, excessive breeding has become unrestrainable, and there is a high possibility that pests may be infested heavily. It has been predicted that pests of alien species once landed will increase explosively in a short time and damage human, livestock and agricultural products due to the natural enemy-free environment and their high fecundity, and measures to deal with such situation are desired.

Conventionally, agents having an insecticidal effect, such as organophosphates, carbamates and the like, have been widely used as pest control agents. However, these are associated with the problem of damage to human and livestock. While a number of low toxic pyrethroid agents have appeared in recent years, as long as their effectiveness expression mechanism is based on the biocidal activity, concerns about the health of human and livestock as well as influence on the environment cannot be eliminated.

On the other hand, pest control agents based not on insecticidal activity but on repellent effect are known. Repellents free of biocidal activity are expected to simultaneously provide high safety and pest controllability. As a conventional agent exhibiting a repelling action against broad kinds of pests such as mosquitoes, ants, horseflys, cockroaches and the like, DEET (N,N-diethyl-m-tolamide) is known. However, since DEET is volatilized in the air in a comparatively short time, it is difficult to maintain its repellent effect for a long time. While terpenoid compounds such as menthol, p-menthane-3,8-diol and the like are known to have a repellent effect against mosquitoes and terpenoid compounds such as linalool, geraniol and the like are known to have a repellent effect against cockroaches, they do not necessarily retain practical effectiveness from the aspects of "long effective period" and "effectiveness with a small amount" [See Masato NOMURA *et al.*, Nippon Nôgeikagaku kaishi vol. 67, pp. 693-700 (1993).].

The present inventors have found that a compound having the following structure

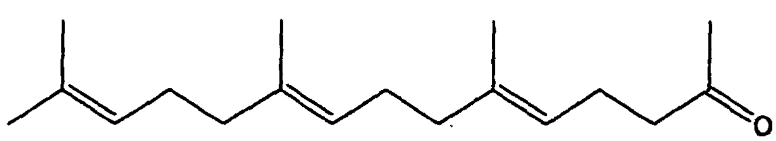

farnesylacetone

has Acarina repellency and proposed an Acarina control agent containing this compound (see JP-A-10-316507.). This Acarina control agent has more advantages as compared to conventionally known organophosphate-, pyrethroid- and carbamate-type and other types of acaricides in that (1) it has lower acaricidal activity, and Acarina can be removed without leaving Acarina cadaver, which is a potent allergen, in the environment, (2) Acarina do not acquire resistance easily, (3) it is highly safe to human and livestock, and the like.

The above-mentioned publication discloses that farnesylacetone can be used for controlling Acarina. However, it does not disclose that the Acarina control agent can be used for repellence of pests other than Acarina and that a particularly remarkable repellent effect can be obtained by maintaining farnesylacetone in an effective concentration range in a space where the presence of pests is not desired.

## Disclosure of the Invention

The present inventors have conducted intensive studies and found that pests other than Acarina can be particularly effectively controlled by allowing gaseous farnesylacetone to be present at a particular concentration of 0.001-20,000 μg/L in a space where pest repellence is intended, further that such effect can be achieved when not only farnesylacetone but also a compound having the formula (I)

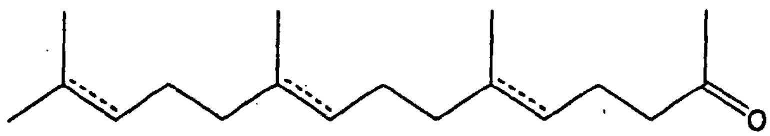

(I)

wherein --------- is a single bond or a double bond, (hereinafter to be also referred to as compound (I)) is used, and that sustention of the action for a long time can be achieved by continuous vaporization of an agent comprising compound (I) (e.g., liquid compound (I) or a diluent thereof) by a vaporization enhancing means, which resulted in the completion of the present invention.

Accordingly, the present invention provides a method of effectively controlling pests, which comprises maintaining the concentration of compound (I) within a repellence effective concentration range for a long time in a space where pest repellence is intended, a method and an apparatus for efficiently achieving such effective concentration, and a pest control agent containing compound (I) as an active ingredient. Thus, the present invention provides the following.

[1] A method of controlling a pest, which comprises maintaining a gaseous compound having the formula (I)

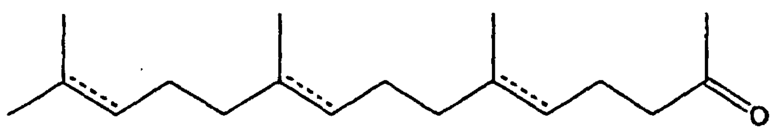

(I)

wherein --------- is a single bond or a double bond, at a concentration of 0.001-20,000 μg/L in a space where pest repellence is intended.

[2] The method of the above-mentioned [1], wherein the aforementioned concentration is achieved by vaporizing a compound having the formula (I) by a vaporization enhancing means.

[3] The method of the above-mentioned [1] or [2], wherein the aforementioned concentration is achieved by vaporizing a compound having the formula (I) by a vaporization area expanding means.

[4] The method of the above-mentioned [2] or [3], wherein the vaporization enhancing means is a heating means.

[5] The method of the above-mentioned [2] or [3], wherein the vaporization enhancing means is an air blowing means.

[6] An apparatus for controlling a pest, which comprises a reservoir means for an agent containing a compound having the following formula (I)

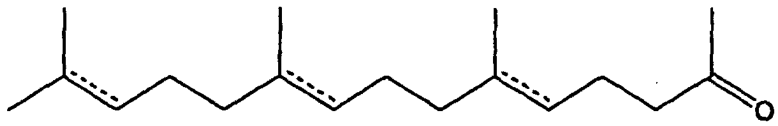

(I)

wherein --------- is a single bond or a double bond, and
a means for enhancing vaporization of the compound having the formula (I).
[7] The apparatus of the above-mentioned [6], further comprising a vaporization area expanding means for the compound having the formula (I).
[8] The apparatus of the above-mentioned [6] or [7], wherein the vaporization enhancing means is a heating means.
[9] The apparatus of the above-mentioned [6] or [7], wherein the vaporization enhancing means is an air blowing means.
[10] A pest control agent comprising a compound having the following formula (I)

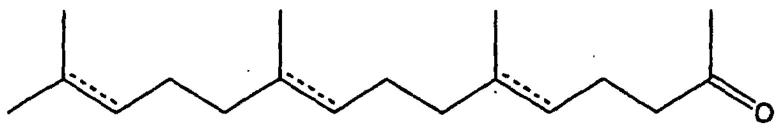

(I)

wherein --------- is a single bond or a double bond,
as an active ingredient.

**Detailed Description of the Invention**

The compound (I) is a known compound and is chemically synthesized at a large scale as a starting material for synthesizing, for example, a side chain of vitamin E and vitamin $K_2$. When -------- is a double bond, compound (I) includes plural kinds of geometrical isomers based on different connection sites to the double bond (*cis, trans*). The compound (I) to be used for the present invention may be any of these geometrical isomers, or a mixture of two or more kinds of these geometrical isomers, where the mixing ratio is not particularly limited.

The "gaseous" of the gaseous compound (I) of the present invention includes a mist state depending on the vaporization conditions, surrounding environmental conditions, and the like.

The concentration of gaseous compound (I) in a space where pest repellence is intended is at least not less than 0.001 μg/L, preferably not less than 0.01 μg/L and not more than 20,000 μg/L at most, preferably not more than 2,000 μg/L. When the concentration is less than 0.001 μg/L, a pest controlling effect is not found and when it exceeds 20,000 μg/L, the odor compound (I) generates becomes unpleasantly strong and is not practical.

The space where pest repellence is intended is free of any particular limitation as regards size, shape and the like, because the amount of use and method of use of compound (I) can be adjusted so that the above-mentioned concentration can be achieved.

The agent comprising compound (I) in the context of the present specification refers to a single compound of compound (I) and a dilute solution obtained by diluting compound (I) with a diluent, or one containing other carriers, including not only a liquid but a solid. As the diluent, any inorganic or organic diluent can be used as long as it does not exert an adverse influence on compound (I). As the diluent, a solvent, an aroma retention agent, a moisturizer and the like can be used. Of these, those having high safety, which are used as starting materials for cosmetics, are preferable, and, for example, alcohols such as ethyl alcohol, isopropyl alcohol and the like, ketones such as acetone and the like, esters (low boiling point) such as ethyl acetate and the like; silicone oil, polyethylene glycol, polypropylene glycol, jojoba oil, squalane, liquid paraffin, rape seed oil, cotton seed oil, tung oil, camellia oil, other vegetable oil (high boiling point oil) and the like can be mentioned. It is also possible to add an additive such as emulsifier and the like to a diluent for compound (I) and use the mixture as a water dispersible agent. As the additive, for example, alkylbenzenesulfonates, α-olefinesulfonates, alkanesulfonates, tetraammonium salts having long-chain alkyl groups, aliphatic mono- or di-ethanolamide, (poly)ethylene glycol ester or ether of fatty acid, glycerin ester of mono-fatty acid, sorbitan esters of fatty acid, polyoxyethylene sorbitan fatty acid ester, alkylphenyl polyoxyethylene ether, N-alkyl betaine-type or sulfobetain-type surfactants and the like can be mentioned. Of these, those having high safety, which are used as starting materials for cosmetics, such as sodium octylsulfosuccinate, polyoxyethylensorbitan monolaurate and the like are preferable. In addition, the agent comprising compound (I) can further contain auxiliary agent, stabilizer, thickener,

coloring agent, flavor and the like, as necessary.

As a method of vaporizing a sufficient amount of a liquid agent comprising compound (I) to achieve the concentration of gaseous compound (I) in the aforementioned space where pest repellence is intended, any method capable of achieving the object can be used without a particular limitation. Such method and an apparatus to achieve the method are concretely and exemplarily shown in the following.

A method comprising placing an agent comprising compound (I) in a container having a porous wall, such as unglazed pottery, sintered metal and the like, and allowing compound (I) to vaporize from the about entire outer surface upon oozing of the agent comprising compound (I) out on the outer surface of the container. The container having a porous wall in this method corresponds to the reservoir means for an agent comprising compound (I) in the apparatus of the present invention, and is also a vaporization area expanding means. The reservoir means for an agent comprising compound (I) is not limited to the above-mentioned container and is not particularly limited as long as it can reserve an agent comprising compound (I) until vaporization. For example, the means may be a reservoir means embodied by preserving an agent comprising compound (I) in a container such as a glass or plastic bottle and the like, distributing the agent in the container closed tightly and cutting open a part of the container when in use, or opening the lid and transferring the contents into vaporization area expanding means or a container, and a vaporization area expanding means to be explained in the following also can be a reservoir means depending on the embodiment thereof.

As a different method, a method comprising immersing one end of a cloth, string or sponge like vaporization area expanding means having a wide surface area in a reservoir means for an agent comprising compound (I), thereby allowing the vaporization area expanding means to absorb the agent comprising compound (I) by a capillary phenomenon, or continuously supplying an agent comprising compound (I) from the reservoir means for the agent comprising compound (I) to the vaporization area expanding means, thereby allowing the agent to be absorbed, and vaporizing compound (I) from the surface of the vaporization area expanding means can be mentioned. Examples of the vaporization area expanding means used for this method include natural fibers such as pulp, cotton, hemp and the like; synthetic fibers such as polyester and the like; paper, fabric, knitted product, felt and non-woven fabric produced from glassfiber and the like; a sponge formed article which is a porous structure made from a synthetic resin or glass; and further, a strand, knitted product, fabric of hollow fiber produced from synthetic resin or glass, and the like can be mentioned. These are not particularly limited as long as they can expand the vaporization area of an agent comprising compound (I). While it is difficult to give a specific figure of the wide surface area necessary for its vaporization, because it varies depending on the conditions such as materials of the vaporization area expanding means and the like, the wider the surface area is, it is more possible to promote efficient vaporization. It is extremely difficult to measure the surface area of porous substances and the surface area of fiber products, but a surface area of at least 50 $cm^2$, preferably not less than 100 $cm^2$, is practical. In the case of a wide surface area, the concentration of compound (I) in a space where pest repellence is intended can be adjusted to fall within the above-mentioned range by reducing the concentration of compound (I) contained in the agent, and in the case of a small surface area, the concentration of compound (I) in the space can be adjusted to fall within the above-mentioned range by increasing the concentration of compound (I) contained in the agent.

As a different method for achieving the object mentioned in the foregoing paragraph, a method comprising coating or spraying an agent comprising compound (I) on a vaporization area expanding means having a wide surface area can be mentioned. In this case, a vaporization area expanding means corresponds to a reservoir means for an agent comprising compound (I). As examples of such coating or spray means, a brush, a spray, direct spraying from a bottle container, dropwise addition using a dropper, spraying using a sprinkling pot and the like can be mentioned.

Coating and spraying on a vaporization area expanding means may be performed once or plural times, and coating and spraying may be appropriately combined. For plural times of coating or spraying, the interval between respective coatings and sprayings is calculated based on actual measurement of disappearance time of compound (I) or theoretical assumption thereof, and before the interval period expires or when it has expired, the coating or spraying is preferably applied. It is recommended that a use manual should be attached, which describes such manner.

As mentioned above, vaporization of compound (I) can be also accelerated by increasing the surface area of a vaporization area expanding means. Since compound (I) has a high boiling point, it is more preferable to use a vaporization enhancing means to forcibly vaporize compound (I). Thus, in another embodiment of the present invention, the aforementioned concentration is preferably achieved by forcibly vaporizing compound (I) using a vaporization enhancing means via or not via a vaporization area expanding means, which means is explained now.

Since the vaporization enhancing means is not particularly limited as long as it can forcibly vaporize compound (I), any means can be used. It may intend to vaporize compound (I) alone or it may vaporize compound (I) when vaporizing other substances contained along with compound (I) in an agent comprising compound (I).

As such means, a heating means and an air blowing means can be mentioned. For example, when a heating means is used as an enhancing means to vaporize compound (I), as one embodiment to achieve the object of the present invention, one using an apparatus equipped with a heating means (preferably further equipped with a temperature control means), which heats an agent comprising compound (I) included in the inside of the apparatus to a suitable

temperature by a heating means and a temperature control means, and vaporizes compound (I) from the inner and outer surfaces and/or outer surface of the apparatus can be mentioned. In another embodiment, an apparatus is used, wherein this apparatus is combined with the aforementioned vaporization area expanding means having a wide surface area, one end of the vaporization area expanding means is immersed in a reservoir containing an agent comprising compound (I) to allow absorption by a capillary phenomenon, or the agent comprising compound (I) is continuously supplied to a vaporization area expanding means to allow absorption, and a reservoir means or a vaporization area expanding means for the agent comprising compound (I) are heated to an appropriate temperature by a heating means and a temperature control means to forcibly evaporate compound (I). As the above-mentioned heating means, heat generation by heating wires such as nichrome wire and the like, low energy light sources such as a pilot lamp; and the like can be mentioned. As the above-mentioned temperature control means, a bimetal is most convenient, but one controlling an electric power to be supplied to a heating wire by inputting a temperature detected by a thermo couple, a thermistor and the like into a CPU may be used.

When an air blowing means is used as a vaporization enhancing means, use of an apparatus that forcibly vaporizes compound (I) by blowing an air by an air blowing means against a vaporization area expanding means that has absorbed an agent comprising compound (I) can be mentioned. As such air blowing means, fans such as a propeller fan, a sirocco fan and the like, a pump having a film and a valve (e.g., a pump used for bubbling an air into a water tank when raising goldfish) and the like can be mentioned. As a different embodiment, an apparatus wherein a heating means is incorporated in pair with an air blowing means, an agent comprising compound (I) is heated to an appropriate temperature by sending a warm air to a vaporization area expanding means to forcibly vaporize compound (I) can be mentioned.

A flash point of compound (I) is as low as about 110°C and as high as about 160°C, and the heating temperature of a heating means is preferably a temperature not less than 10°C lower than the flash point. This temperature needs to be appropriately adjusted in accord with the properties of the diluent and the like to be used alongside. For example, it is 50-110°C, preferably 60-100°C. In addition, the wind speed of the air blowing means is preferably 0.001-5 m/sec, and the air quantity is preferably 0.001-10 L/sec.

It is possible to have gaseous compound (I) present at a concentration of 0.001-20,000 µg/L in a space where pest repellence is intended, by regularly coating or spraying an agent comprising compound (I) on items placed in a house. As such items, for example, carpet, tatami mat, bedding, stuffed toy, floral tube, vase, decorative figurine, artificial flower, and other items generally set in a house can be mentioned. In one embodiment of the present invention, a method comprising adding an agent comprising compound (I) to a flooring wax or other polishing agents, impregnating a disposable mop, a reusable mop and the like therewith and coating a windowsill, a doorsill, a screen window and the like can be mentioned, and according to such method, invasion of pests can be prevented and pests can be forced out by evaporating compound (I) from a wide surface area and filling the vapor of compound (I) in the room or near the coated surface. An item to which an agent comprising compound (I) has been applied corresponds to a reservoir means for the agent comprising compound (I) and a vaporization area expanding means.

An agent comprising compound (I) can take any dosage form such as tablet, pellet, capsule, cream, ointment, aerosol, powder, liquid, emulsion, suspension and the like. An agent comprising compound (I) used for the method of the present invention can be used as a pest control agent containing compound (I) as an active ingredient (hereinafter to be simply referred to as an agent of the present invention). While the agent of the present invention can be used alone, it may be used concurrently with other pest control agents. In addition, other components effective for pest control may be added to give a single preparation.

To facilitate use of the agent of the present invention, it is preferable to add, besides compound (I), a solvent, a carrier, an emulsifier, a stabilizer and the like to give a preparation and use the preparation by processing as necessary into a dilute solution and the like. Where necessary, other components, such as an antioxidant, a sustaining substance, a paint, a carrier, a flavor, a coloring agent and the like may be added or combined. It is preferable to make a flavor or a coloring agent function as an indicator informing the timing of replacing the item for controlling pests using the agent of the present invention. For example, a flavor having a lower boiling point than that of compound (I), which loses fragrance the item for controlling pest had when use was started, before disappearance of compound (I) or which clearly indicates the change of fragrance, is preferably added.

Of compounds (I), those having a double bond are gradually oxidized in the air. To prevent this, an antioxidant is preferably added or concurrently used. As the antioxidant, for example, phenol type antioxidants such as vitamin E, butylhydroxytoluene, Irganox 1010, Irganox 1076 and the like; polyphenol type antioxidants such as tannic acid, gellic acid and the like are used. The amount of use thereof is preferably in the range of 0.001-10 wt%, more preferably in the range of 0.1-5 wt%, relative to compound (I).

As a pest controlling ingredient that can be added besides compound (I), for example, compounds having a repellent effect against pests such as diethyltoluamide, 2,3,4,5-bis(Δ2-butylene)-tatrahydrofurfural, di-n-propyl isocinchomeronate di-n-butylsuccinate, 2-hydroxyethyloctylsulfide, 2-t-butyl-4-hydroxyanisole, 3-t-butyl-4-hydroxyanisole, 1-ethynyl-2-methylpentenyl 2,2,3,3-tetramethylcyclopropanecarboxylate, N-hexyl-3,4-dichloromaleimide and the like

can be mentioned. A pest control agent containing these components can be used concurrently with the agent of the present invention.

As the above-mentioned solvent, any solvent can be used as long as it does not exert an adverse influence on compound (I). As such solvent, for example, alcohols such as ethyl alcohol, isopropyl alcohol and the like; silicone oil, polyethylene glycol, polypropylene glycol, jojoba oil, squalane, liquid paraffin; rape seed oil, cotton seed oil, tung oil, camellia oil, other vegetable oils and the like can be mentioned. The amount of use thereof is preferably in the range of 10-99 wt%, more preferably in the range of 50-95 wt%, of the entire preparation.

As the above-mentioned carrier, any carrier can be used as long as it does not exert an adverse influence on compound (I). As such carrier, for example, silica, active charcoal, porous zirconium phosphate, porous alumina, diatomaceous earth, perlite, vermiculite, zeolite, galleon earth, wood powder, wood chip and the like can be mentioned.

As the above-mentioned emulsifier, any emulsifier can be used as long as it does not exert an adverse influence on compound (I). As such emulsifier, for example, alkylbenzenesulfonates, $\alpha$-olefinesulfonates, alkanesulfonates, tetraammonium salts having long-chain alkyl groups, aliphatic mono- or di-ethanolamide, (poly)ethylene glycol ester or ether of fatty acid, glycerin ester of mono-fatty acid, sorbitan esters of fatty acid, polyoxyethylene sorbitan fatty acid ester, alkylphenyl polyoxyethylene ether and the like can be mentioned. The amount of use thereof is preferably in the range of 5-90 wt%, more preferably in the range of 10-50 wt%, of the entire preparation.

As the above-mentioned stabilizer, any stabilizer can be used as long as it does not exert an adverse influence on compound (I). As such stabilizer, for example, polyvinyl alcohol, gelatin, carboxymethylcellulose, polyvinylpyrrolidone, polyethylene glycol, macrogol, acacia, starch and the like can be mentioned.

As the above-mentioned sustaining substance, any sustaining substance can be used as long as it does not exert an adverse influence on compound (I), and includes thermoplastic resins, waxes, gels, various microcapsules and the like.

The agent comprising compound (I) may be a solid. As a sustaining substance to be added to give a solid, for example, thermoplastic resins, waxes, gels, microcapsules, porous inorganic particles and the like can be mentioned.

The agent comprising compound (I) to be used for the method of the present invention may be a formed solid. The formed solid may take any form of granule, pellet, rod, sheet, bulk, flake, sponge and the like, and may be used as a closet dusting powder, an under floor dusting powder and the like, or as an interior decoration, such as a decorative figurine for an alcove ornament, a vase, a calendar, a tapestry, a candle and the like. In addition, a formed product can be used in a container that permits easy vaporization of compound (I) at important points in the house. By taking the form of a formed product, compound (I) can be vaporized for a longer period as compared to the use as the aforementioned liquid.

With regard to the thermoplastic resin, use of a resin having a markedly high molding temperature results in vaporization of compound (I) and the like and marked generation of white smoke upon kneading compound (I) or a dilute solution thereof during molding. Therefore, a thermoplastic resin having a molding temperature of less than 200°C, preferably not more than 160°C, more preferably not more than 140°C, is preferably used. In contrast, use of a resin having a markedly low molding temperature results in a limited use due to high stickiness of the resin. Thus, a resin having a molding temperature of not less than 50°C is preferably used. As the preferable thermoplastic resin, for example, low melting point resins such as a soft acrylic resin comprising (meth)acrylic ester-copolymer, a soft acrylic resin prepared to have a core-shell structure consisting of a rubber part and a hard resin part, an ethylene-vinyl acetate copolymeric resin, a poly(trans-isoprene) resin, a thermoplastic elastomer prepared by block polymerization of styrene-butadiene or isoprene and the like, poly-$\varepsilon$-caprolactone, poly-D,L-decalactone, polydioxinone, urethane resins and the like can be mentioned. The amount of compound (I) to be added to a thermoplastic resin is preferably determined for prolonging the effective period by empirically setting an upper limit amount free of bleeding of compound (I) from the resin and choosing the highest possible amount within the limits. For example, when a soft acrylic resin is used as a thermoplastic resin, the amount of compound (I) to be added is preferably within the range of 10-50 wt%.

As the waxes, for example, higher alcohol, candelilla wax, rice wax, carbawax, Japan wax, yellow beeswax, microcrystalline wax, polyethylene wax, stearic acid, paraffin wax, vaseline, whale oil, beef tallow and the like can be mentioned. The amount of compound (I) to be added to these waxes is preferably determined for prolonging the effective period by empirically setting an upper limit amount free of bleeding of compound (I) from the wax and choosing the highest possible amount within the limits. For example, when stearic acid is used as a wax, the amount of compound (I) to be added is preferably within the range of 10-60 wt%.

As the gels, one that can become an oil gel is preferable for containing a large amount of compound (I). For example, a gelling component such as sodium stearate, aluminum stearate, aluminum 2-ethylhexanoate, dibenzylidene sorbitol and the like is added to compound (I), and a small amount of alcohol or water is used to prepare a gel product. The amount of compound (I) to be added to such gel is preferably 10-60 wt%.

As the above-mentioned paint, any paint can be used as long as it does not exert an adverse influence on compound (I). As such paint, for example, varnish; enamel; acetylcellulose lacquer; ethylcellulose lacquer; alkyd resin

enamels and varnishes; vinyl resin enamels and varnishes such as vinyl chlorides, vinyl acetate-methacrylates, styrene-butadienes and the like; pigment oil paste paint and the like can be mentioned. When compound (I) is added to these paints, an amount is preferably determined for prolonging the effective period by empirically setting an upper limit amount free of stickiness of paint after drying and choosing the highest possible amount within the limits. When it is added to, for example, varnish, the amount of compound (I) to be added to the paint is preferably within the range of 1-10%.

As the above-mentioned flavor, any of natural flavors and synthetic flavors can be used as long as it does not exert an adverse influence on compound (I) and does not prevent the pest repellent effect of compound (I). When the agent of the present invention is used in the living space, use of highly safe flavor is particularly preferable. As the natural flavor, for example, bergamot oil, mentha oil, lemongrass oil, eucalyptus oil, Japanese cypress oil, citronella oil and the like can be mentioned, and as the synthetic flavor, for example, terpenoid flavors such as linalool, lynalyl acetate, geraniol, nerolidol, citral and the like can be mentioned.

The porous inorganic particles mean porous particles made from hardly soluble or insoluble inorganic powder, having an average particle size of from 1 μm to 10 mm, more preferably from 2 μm to 5 mm, and having a BET surface area of not less than 50 $m^2/g$, more preferably not less than 100 $m^2/g$.

The porous inorganic particles comprise silica; metal oxides such as alumina, zinc oxides, magnesium oxides, titanium oxides, zirconium oxides and the like; metal hydroxides such as aluminum hydroxides, magnesium hydroxides and the like; metal silicates such as calcium silicates, magnesium silicates, aluminum silicates and the like; metal carbonates such as calcium carbonate, magnesium carbonate and the like; metal sulfates such as calcium sulfate, magnesium sulfate and the like; clay minerals such as montmorillonite, talc, pyrophyllite, zeolite and the like; and the like.

The porous inorganic particles may be synthesized by a sol-gel method using metal alkoxide and the like, an ion exchange method using a soluble salt of a metal and the like, or naturally occurring ones may be used as they are or after purification. When the synthesized or naturally occurring inorganic material itself is an already substantial porous solid, this porous solid may be appropriately adjusted to an easy-to-use size by a means such as pulverization, sieving and the like and used as a carrier to absorb compound (I). When such method is not directly available, the synthesized or naturally occurring inorganic material may be suspended in a solvent such as water and the like and granulated by a spray-dry method, or granulated to a desired particle size in a granulator that rotates a slurry or a powder while drying and the like, adjusted in size, and where necessary, and sintered and the like to secure stability of the particles, which are then used as a carrier. As a modified method, a clay mineral having enlarged layer-to-layer spacing by a treatment with tetraammonium salts may be used as a carrier; a binder made from an organic polymer substance that improves binding of inorganic powders and compound (I) may be granulated simultaneously to introduce compound (I) at once into the inorganic carrier; and an organic polymer substance containing compound (I) as a binder may be mixed with these inorganic powders and the powder mixture can be granulated together.

The agent of the present invention can be prepared into any dosage form, such as an aerosol, an oil agent, a fumigant, a sheet, a powder, a microcapsule, a water dispersible agent and the like by a known method. The agent of the present invention in these dosage forms is applied to various materials such as woven cloth, knitted cloth, wet type non-woven fabric (paper), dry type non-woven fabric, plywood, synthetic resin sheet, synthetic resin plate, wood and the like by the operations of spraying, coating, impregnation, spreading and the like.

When compound (I), which is the active ingredient in the agent of the present invention, is added to various resins and processed into molded objects such as fiber, film, sheet, plate and the like, and these molded objects are used as starting materials for production of commodities for living in a house where pests inhabit, such as various building materials, tatami mat, bedding, carpet, batting and the like, and the molded objects are used as members for controlling pests, the aforementioned molded objects, commodities for living and various members that express a pest controlling effect are also encompassed in the present invention.

When a preparation is formed, the content of compound (I) in the agent of the present invention is preferably in the range of 0.1-99 wt%, more preferably in the range of 5-99 wt%. The amount of the agent of the present invention to be used is not particularly limited as long as a pest controlling effect is expressed, but it is, for example, preferably in the range of about 0.01-10 g, more preferably in the range of about 0.1-3 g, based on compound (I), per unit area 1 $m^2$ of a target object for the operation of spraying, coating, impregnation, spreading and the like.

When compound (I) is added to various resins and processed into molded objects such as fiber, film, sheet, plate and the like, moreover, the content of compound (I) in the molded object is preferably in the range of about 1-60 wt%, more preferably in the range of about 10-50 wt%.

In addition, the agent of the present invention can be formed into microcapsules. As the microcapsule, microcapsules prepared by surface polymerization, *in situ* polymerization, submerged curing coating, core solvation, physical and mechanical production method or a combination of these known methods are used. As the wall materials of microcapsules, for example, polyester, polyamide, polyurethane, polyurea, epoxy resin, polystyrene resin, ethylene-vinyl acetate copolymer, polylactic acid resin, acrylic resin, cellulose resin, sodium alginate, acacia, polyvinyl alcohol,

gelatin, albumin and the like can be mentioned, with preference given to polylactic acid resin.

While the average particle size of the microcapsule is not particularly limited, but it is preferably in the range of 10 μm-1 mm, more preferably in the range of 20 μm-500 μm. The reason therefor is that, when the particles of microcapsules are too fine, compound (I) inside is released in a short time, oxidized, and the effective period of microcapsules becomes short. On the other hand, when the particles of microcapsules are too coarse, kneading into molded objects and the like becomes difficult and the kinds of objects capable of containing the particles are limited. For example, when microcapsules are adhered to a fiber product using a binder, the microcapsules are regarded clearly as a foreign substance and artificially eliminated, or intentionally crushed to stain the fiber products.

The amount of the microcapsules used to achieve the aforementioned pest repellence concentration is preferably not less than 3 g, more preferably not less than 5 g, per 1 $m^2$ of the space where repellence is intended, such as inside a room and the like. The release of compound (I) from the microcapsules is limited to a very low level, and even if a large amount is used, no problem occurs in terms of living environment. In consideration of economical aspect, and those who are highly sensitive to smell and do not like the smell of compound (I), however, it is preferably not more than 100 g, more preferably not more than 50 g, per 1 $m^2$.

By kneading the agent of the present invention with the aforementioned thermoplastic resins and then molding, a tape, a film, a sheet, a fiber, or other molded objects, having pest controllability, can be obtained. By processing these molded objects, closet spread materials, placement materials, clothing spreads, furniture back placement materials, under tatami mat spreads, floor sheets, carpet sheets, automobile interior materials, bed mats, mattresses, animal pest control bands (collars), pet animal clothings, pet animal spread and the like with pest controllability can be obtained. In addition, by attaching the agent of the present invention to a fiber product using a binder, a broad range of fiber products can have pest controllability, which may then be processed into pest controllable fiber products such as bedding, coverlet for kotatsu and the like. The agent of the present invention can be added to a paint, a paste agent and a spraying agent, which can be used as a paint or an adhesive for building materials, or sprayed on kennels and furnishings for pets and animals, or sprayed onto the body of an animal, whereby pests attached to kennels and animal bodies can be forced out.

The pests to be the target for the method for controlling pest and the control agent of the present invention are those belonging to the class Insecta, the class Arachnida, the class Chilopoda, the class Symphyla, the class Diplopoda, the class Pauropodra, the class Gastropoda or the class Hirudinea. They include, for example,
pests belonging to the class Insecta such as
pests belonging to the Isoptera such as Rhinotermitidae, Termitidae and the like,
pests belonging to the Orthoptera such as Blattellidae, Blattidae, Acrididae, Tettigoniidae, Gryllidae, Gryllotalpidae and the like,
pests belonging to the Hemiptera such as Aphididae, Delphacidae, Cicadellidae, Typhlocybidae, Pentatomidae, Cydnidae, Plataspidae, Acanthosomatidae, Coreidae, Lygaeidae, Meridae, Pseudococcidae, Coccidae, Diaspidiae, Aleyrodidae, Psyllidae and the like,
pests belonging to the Coleoptera such as Dermestidae, Scarabaeidae, Coccinellidae, Cerambycidae, Chrysomelidia, Scolytidae, Curculionidae, Rhynchophoridae, Bruchidae and the like,
pests belonging to the Hymenoptera such as Formicidae, Tenthredinidae, Vespidae, Siricidae, Cynipidae and the like,
pests belonging to the Diptera such as Culicidae, Muscidae, Cecidomyiidae, Chloropidae, Tephritidae, Agromyzidae, Chironomidae, Anthomyiidae and the like,
pests belonging to the Lepidoptera such as Yponomeutidae, Noctuidae, Tineidae, Lyonetiidae, Gracillariidae, Phyllocnistidae, Sphingidae, Sesiidae, Tortricidae, Pyralidae, Lymantriidae, Sphingidae, Papilionidae, Lycaenidae and the like,
and the like;
pests belonging to the class Arachnida such as
pests belonging to Araneina (e.g., Araneidea, Theridiidae, Linyphiidae, Liphistiidae, Lycosidae, Thomisidae and the like),
pests belonging to Scorpionida (e.g., Butnus and the like), and the like;
pests belonging to the class Gastropoda such as Philomycidae and the like;
pests belonging to the class Hirudinea;
and the like can be mentioned.

More specifically, for example, the following can be mentioned.

I. class Insecta

- Rhinotermitidae
  Reticulitermes speratus, Coptotermes formosanus etc.
- Blattellidae
  Blattella germanica, Blattella lituricollis etc.

- Blattidae
  Periplaneta fuliginosa, Periplaneta americana etc.
- Acridiae
  Mecostethus magister, Patanga japonica etc.
- Aphididae
  Acyrthosiphon pisum, Aphis pomonella, Brevicoryne brassicae etc.
- Delphacidae
  Laodelphax stratella etc.
- Cicadellidae
  Recilia oryzae, Orientus ishidae etc.
- Pentatomidae
  Nezara antennata, Lagynotomus elongatus etc.
- Pseudococcidae
  Geococcus oryzae, Planococcus citri etc.
- Aleyrodidae
  Trialeurodes packardi, Trialeurodes vaporariorum etc.
- Psyllidae
  Psylla mali, Psylla pyrisuga forst etc.
- Dermestidae
  Anthrenus verbasci, Attagenus japonicus etc.
- Scarabaeidae
  Rhomborrhina japonica, Holotrichia kiotoensis, Cetoniine beetles etc.
- Coccinellidae
  Epilachna boisduvali, Epilachna vigintioctopunctata etc.
- Cerambycidae
  Anoplophora malasiaca, Oberea japonica, Prionus insularis etc.
- Chrysomelidae
  Aulacophora femoralis, Galerucella grisescens, Donacia provosti Fairmaire etc.
- Scolytidae
  Scolytus japonicus Chapuis, Tomicus piniperda, Xyleborus sobrinus etc.
- Formicidae
  Camponotus japonicus, Camponotus kiusiuensis, Formica japonica etc.
- Tenthredinidae
  Allantus albicinctus, Caliroa matsumotonis etc.
- Vespidae
  Vespa mandarinia, Vespa simillima etc.
- Culicidae
  Culex pipiens, Culex tritaeniorhynchus Giles etc.
- Muscidae
  Musca domestica, Musca bezzii, Muscina stabulans etc.
- Cecidomyiidae
  Contarinia okadai Miyoshi, Contarinia mali etc.
- Chloropidae
  Chlorops oryzae, Meromyza nigriventris etc.
- Tephritidae
  Dacus tsuneonis, Zeugodacus cucurbitae, Dacus depressus etc.
- Agromyzidae
  Agromyza oryzae, L. brassicae etc.
- Chironomidae
  Chironomus oryzae etc.
- Yponomeutidae
  Plutella xylostella, Yponomeuta malinellus etc.
- Noctuidae
  Autographa nigrisigna, Sesamia uiferens etc.
- Tineidae
  Nemapogon granellus, Tinea translucens etc.
- Lyonetiidae
  Lyonetia clerkella etc.

- Gracillariidae
  Caloptilia zachrysa, Acrocercops astaurota etc.
- Phyllocnistidae
  Phyllocnistis citrella, Phyllocnistis toparca etc.
- Sphingidae
  Acosmeryx castanea, Marumba gaschkewitschii etc.
- Sesiidae
  Synanthedon hector, Paranthrene regalis etc.
- Tortricidae
  Archips breviplicanus, Cornicacoecia lafauryana etc.
- Pyralidae
  Conogethes punctiferalis, Chilo suppressalis etc.
- Lymantriidae
  Lymantria dispar, Calliteara pseudabietis etc.
- Sphingidae
  Marumba gaschkewitschii etc.
- Lycaenidae
  Pieris rapae, Colias erate etc.
- Papilionidae
  Papilio xuthus, Papilio protenor etc.

II. class Arachnida

- Araneidea
  Araneus ventricosus, Gasteracantha kuhlii etc.
- Theridiidae
  Achaearanea tepidariorum, Achaearanea culcivora etc.
- Linyphiidae
  Linyphia etc.
- Liphistiidae
  Carrhotus xanthogramma etc.
- Lycosidae
  Lycosa coelestis, Lycosa ishikariana etc.
- Thomisidae
  Xysticus audax, Oxytate striatipes, Misumenops tricuspidatus etc.

III. class Latigastra
Pandinus imperator etc.
IV. class Chilopoda
Scolopendra subspinipes multidens Newport, Bothropolys rugosus, Thereuonema tuberculata, Pleurogeophilus etc.
V. class Symphyla
Hanseniella, Scutigerella nodicerca, Symphylella vulgaris etc.
VI. class Diplopoda
Parafontaria laminata, Julida, Diplomaragna, Tokyosoma takakuwai Verhoeff etc.
VII. class Pauropodra
Pauropodra etc.
VIII. class Gastropoda
Limax marginatus, Incilaria, Limax flavus etc.
IX. class Hirudinea
Hirudo nipponia, Erpobdella lineata etc.

Being applicable to a broad range of pests as shown above, the agent of the present invention is effectively utilized for protection of agricultural products, preserved grain and the like from various pests, improvement in the safety and hygiene of the living environment and the like, and the like.

## Examples

The present invention is explained in detail by referring to the following Examples, which are not to be construed as limitative.

Reference Example 1: measurement of farnesylacetone concentration in the air

Farnesylacetone (1 mL) was placed in a 50 mL sample bottle, and a large magnetic stirring bar capable of rotating the air as well was placed therein. The bottle was placed neck-deep in an oil bath at 130°C with rotation, and heated for 1 hr to saturate the inside of the sample bottle with farnesylacetone vapor. Thereafter, the gas in the sample bottle was taken by 5 mL with a gas tight syringe, and using gas chromatography with an FID detector, the concentration of farnesylacetone was measured by the absolute calibration method. As a result, 20,000 μg/L of farnesylacetone was found to be contained in this 5 mL gas. This sampled gas somewhat contained a white mist, had a strong odor, caused cough when inhaled in a large amount, and provoked uncomfortable feeling in human.

Farnesylacetone (1 mL) was placed in a 50 mL sample bottle, and a large magnetic stirring bar capable of rotating the air as well was placed therein. The bottle was placed neck-deep in a water bath at 60°C with rotation, and heated for 1 hr to fill the inside of the sample bottle with farnesylacetone vapor. Thereafter, the gas in the sample bottle was taken by 5 mL with a gas tight syringe, and using gas chromatography with an FID detector, the concentration of farnesylacetone was measured by an absolute calibration method. As a result, 20 μg/L of farnesylacetone was found to be contained in this 5 mL gas. Almost simultaneously, the gas (5 mL) in the sample bottle was taken again, a propeller was set in a 10 L beaker, the gas was added into the sealed beaker, the air in the beaker was stirred with the propeller for 10 min to dilute the gas 2,000-fold, whereby gas containing 0.01 μg/L farnesylacetone was obtained. The diluted gas (200 mL) was sampled with a syringe, a propeller was set in a 2 L flask, the gas was added into the sealed flask, the air in the beaker was stirred with the propeller for 10 min to further dilute the gas 10-fold, whereby gas containing 0.001 μg/L farnesylacetone was obtained. This sampled gas scarcely had an odor detected by human.

Examples 1 and 2 and Comparative Example 1

A 20-mesh soft wire net was cut into 15 × 16 cm, folded into two, and open two sides (longitudinal and transverse sides) were folded to give a bag. Four of these bags were prepared. Farnesylacetone (mixing ratio:*cis-trans* form/*cis-trans* form and *trans-cis* form/*trans-trans* form=15/50/35) was dissolved in ethanol at 0.2 wt% and 1 wt% and one wire net bag each was immersed in one of the obtained solutions for about 10 sec. The bag was taken out from the solution, and air-dried at room temperature for 30 min to give a farnesylacetone treated wire net bag. The wire net bag treated with farnesylacetone 0.2 wt% solution was taken as Example 1, and the wire net bag treated with farnesylacetone 1 wt% solution was taken as Example 2. In addition, DEET was dissolved in ethanol at 1 wt%, and a wire net bag treated in the same manner with the obtained solution was taken as Comparative Example 1. The wire net bags of Examples 1 and 2 and Comparative Example 1 were evaluated in Experimental Example 1 for the repellent effect on adult female Culex pipiens using an untreated wire net bag as a control.

Experimental Example 1

50 to 70 female adult Culex pipiens at 10-15 days after eclosion and having high blood sucking activity were released inside each of four adult raising cages (30 × 40 × 30cm). One mouse was placed from the opening of each wire net bag of Example 1, Example 2, Comparative Example 1 and control and fixed as a blood source. The wire net bags were placed in the cages in which Culex pipiens were released. As a blood sucking result, the number of the test Culex pipiens with swollen abdomen was counted at a certain time intervals after the start of the test, which number was divided by the number of test Culex pipiens to calculate a blood sucking rate (%). The test was conducted inside a room maintained at a temperature of 23-24°C. The test results are shown in Table 1.

Table 1

| cage No. | mouse-fixed wire net bag disposed | agent for treatment (treatment concentration) | number of test insects (mosquitoes) | blood sucking rate (%) with lapse of time | | |
|---|---|---|---|---|---|---|
| | | | | 2 hr later | 6 hr later | 18 hr later |
| 1 | Example 1 | farnesyl-acetone (0.2%) | 54 | 0 | 0 | 5.6 |
| 2 | Example 2 | farnesyl-acetone (1%) | 64 | 0 | 0 | 0 |
| 3 | Comparative Example 1 | DEET (1%) | 52 | 0 | 25.0 | 38.5 |
| 4 | Control | - | 59 | 30.5 | 86.4 | 91.5 |

Examples 3 and 4

A mixture of farnesylacetone (mixing ratio:*cis-cis* form/*cis-trans* form and *trans-cis* form/*trans-trans* form=15/50/35) and vitamin E (antioxidant) (weight ratio 99:1) was dissolved in methanol at 0.06 wt% and 0.3 wt%. The obtained solutions were coated on a 0.26 mm thick paper sheet at 167 g/l $m^2$, and air-dried to evaporate methanol, whereby sheets having a farnesylacetone coating at 0.1 g/$m^2$ and 0.5 g/$m^2$ were obtained and used as Example 3 and Example 4, respectively. Both a farnesylacetone coating sheet prepared on the very day and one left open and uncontrolled by hanging in a room at a room temperature of 21-24°C for 2 weeks, where ventilation rate was 10-15 times per 1 hour, were evaluated in Experimental Examples 2-4 for repellence performance against the larvae of Blattella germanica, Camponotus japonicus and Anthrenus verbasci using untreated paper sheet as a control.

Experimental Example 2

One box shelter (length 8 cm × side 12.5 cm × height 2 cm, made of white corrugated cardboard) having one entrance (width 1 cm × height 2 cm) and one of the test-day-made products of Example 3 and 4, the products left open and uncontrolled for 2 weeks of Example 3 and 4 and a control paper sheet, which was adhered to an interior floor surface, was prepared for each test sample. In a square tinplate container (floor area 1 $m^2$, depth 17 cm) were disposed 5 kinds of box shelters on a concentric circle with the openings facing the center. In the tinplate container, feed and drinking water were placed in the center. In the container were released 25 male or 25 female Blattella germanica and the number of cockroaches in each lurking place was counted with the lapse of time. The test results for male Blattella germanica are shown in Table 2 and the test results for female Blattella germanica are shown in Table 3. The test was performed in a room maintained at a temperature of 23-24°C.

Table 2

| lurking place | farnesyl-acetone amount for treatment (g/$m^2$) | number of cockroaches present (cockroaches) | | | |
|---|---|---|---|---|---|
| | | Start of test | 1 hr later | 4 hr later | 24 hr later |
| Outside box shelter | - | 25 | 0 | 3 | 0 |
| Example 3 (test-day-made product) housing box shelter | 0.1 | 0 | 0 | 0 | 0 |
| Example 3 (product left open and uncontrolled for 2 weeks) housing box shelter | 0.1 | 0 | 2 | 4 | 1 |
| Example 4 (test-day-made product) housing box shelter | 0.5 | 0 | 0 | 0 | 0 |

Table 2 (continued)

| lurking place | farnesyl-acetone amount for treatment (g/m$^2$) | number of cockroaches present (cockroaches) | | | |
|---|---|---|---|---|---|
| | | Start of test | 1 hr later | 4 hr later | 24 hr later |
| Example 4 (product left open and uncontrolled for 2 weeks)housing box shelter | 0.5 | 0 | 0 | 0 | 0 |
| control paper sheet housing box shelter | 0 | 0 | 23 | 18 | 24 |

Table 3

| Lurking place | farnesyl-acetone amount for treatment (g/m$^2$) | number of cockroaches present (cockroaches) | | | |
|---|---|---|---|---|---|
| | | Start of test | 1 hr later | 4 hr later | 24 hr later |
| Outside box shelter | - | 25 | 4 | 8 | 0 |
| Example 3 (test-day-made product) housing box shelter | 0.1 | 0 | 0 | 0 | 0 |
| Example 3 (product left open and uncontrolled for 2 weeks) housing box shelter | 0.1 | 0 | 5 | 3 | 2 |
| Example 4 (test-day-made product) housing box shelter | 0.5 | 0 | 0 | 0 | 0 |
| Example 4 (product left open and uncontrolled for 2 weeks)housing box shelter | 0.5 | 0 | 0 | 0 | 0 |
| control paper sheet housing box shelter | 0 | 0 | 16 | 14 | 23 |

Experimental Example 3

During daytime of a sunny day in early summer, one mound of Camponotus japonicus showing lively outdoor activity was selected, the sheets of Example 3 and Example 4 prepared on the very day of the test and a control paper sheet were cut in 10 cm diameter circles and placed at a point that shares an about 50 cm diameter concentric circle into three equal pieces, with the entrance to the mound of Camponotus japonicus at the center, and about 1 g of powder sugar was placed at the center of each test sheet. A test was sequentially repeated 3 times by changing the positions of the sheets, wherein the ants gathered on the sugar on the test sheet 1 hr later were captured with a transparent pressure-sensitive adhesive sheet. The results of the count of the captured ants are shown in Table 4.

Table 4

| test sheet | farnesylacetone amount for treatment (g/m$^2$) | number of ants captured on sheet (ants) | | |
|---|---|---|---|---|
| | | First test | Second test | Third test |
| Example 3 | 0.1 | 3 | 12 | 5 |
| Example 4 | 0.5 | 1 | 3 | 0 |
| Control paper sheet | 0 | 32 | 54 | 83 |

Experimental Example 4

In a paper box (length 30 cm × side 30 cm × depth 10 cm) were placed the sheets of Examples 3 and 4

prepared on the very day of the test and a control paper sheet, which had been cut into 7 cm diameter circles, such that the center of the circles came on the point that shared the circumference of a 15 cm diameter circle having the same center with the box into three equal pieces, and one 6 cm diameter circle of a thick woolen cloth was placed on the center of each test sheet. Then 30 larvae of Anthrenus verbasci were released at the center of the box, and the number of Anthrenus verbasci larvae present on the wool blanket on each test sheet was counted with the lapse of time. The results are shown in Table 5. The test was performed in a room maintained at a temperature of 23-24°C.

Table 5

| test sheet | farnesylacetone amount for treatment ($g/m^2$) | number of Anthrenus verbasci larvae present on the wool blanket on test sheet (larvae) | | |
|---|---|---|---|---|
| | | 0 hr later | 24 hr later | 48 hr later |
| Example 3 | 0.1 1 | 0 | 0 | 1 |
| Example 4 | 0.5 | 0 | 0 | 0 |
| Control paper sheet | 0 | 0 | 21 | 29 |
| Outside sheet | - | 30 | 9 | 0 |

Example 5

Farnesylacetone (mixing ratio:*cis-cis* form/*cis-trans* form and *trans-cis* form/*trans-trans* form=15/50/35) was dissolved in ethanol at 1 wt% and 20 × 10 × 10 mm pine wood was immersed in the obtained solution for 10 min The pine wood taken out from the solution thereafter was air-dried at room temperature for one day to evaporate ethanol to give a pine wood impregnated with farnesylacetone. Based on the difference in the weight of the pine wood before and after the impregnation, about 30 mg of farnesylacetone was absorbed. A repellent effect of this farnesylacetone impregnated pine wood on Reticulitermes speratus was evaluated in Experimental Example 5 using a pine wood impregnated with ethanol alone and air-dried in the same manner as a control.

Experimental Example 5

A styrole container (95 × 60 × 20 mm) was partitioned into 3 sections (size of 1 section: 30 × 60 × 20 mm; farnesylacetone impregnated pine wood installed section, center section, control pine wood installed section), a 5 mm diameter hole for the passage of the termites was made at a lower center part of two partition walls, and farnesylacetone impregnated pine wood or control pine wood, which had been wetted with water, was placed in each of two sections on both ends as a feed for the termites. Fifty worker ants of Reticulitermes speratus were released in the center section, the outside of the container was completely covered with an aluminum foil to darken the inside, which was maintained at 23-24°C, and the number of the termites in each section was counted at a given time intervals, and whether or not farnesylacetone impregnated pine wood was repellent was observed. About 2 mm diameter ventilation hole was formed in each section of the container and water was supplied any time from the above by dropwise addition to the pine wood. The test results are shown in Table 6.

Table 6

| lapse of test time | number of termites in each section | | |
|---|---|---|---|
| | farnesylacetone impregnated pine wood installed section | center section | control pine wood installed section |
| Start of test | 0 | 50 | 0 |
| 0.5 hr later | 5 | 38 | 7 |
| 1 hr later | 4 | 5 | 41 |
| 2 hr later | 5 | 8 | 37 |
| 24 hr later | 2 | 4 | 44 |
| 48 hr later | 3 | 0 | 47 |

Experimental Example 6

Three sets of experiment systems were prepared wherein quartz sand allowed to absorb a suitable amount of water was spread on a 90 mm diameter schale in a thickness of 1 mm, a 5 mm width groove was formed on a diameter line to divide the dish into two, three 8 mm diameter circular filters impregnated with a suitable amount of a solution of farnesylacetone or phytone in acetone and air-dried were placed in one test section, and three untreated circular filters were placed in the control section.

In each experiment system were each released 10 worker ants of Coptotermes formosanus and raised in an incubator at 28°C, humidity 70%. After a certain time, the number of Coptotermes formosanus in the test section and the control section was counted. The results are shown in Table 7. The repellence rate and mortality were calculated from the following formulas.

$$\text{Repellence rate} = \{1-(\text{number of the ants in the test section/number of the survived ants})\} \times 100\ (\%)$$

$$\text{Mortality} = \text{number of the dead ants}/30 \times 100\ (\%)$$

Table 7

| agent | 1 day later | | | | 4 days later | | | |
|---|---|---|---|---|---|---|---|---|
| | farnesylacetone | | phytone | | farnesylacetone | | phytone | |
| concentration | 1% | 5% | 10% | 50% | 1% | 5% | 10% | 50% |
| test section | 4 | 0 | 11 | 4 | 0 | 1 | - | - |
| control section | 25 | 28 | 19 | 25 | 29 | 26 | - | - |
| death | 1 | 2 | 0 | 1 | 1 | 3 | - | - |
| repellence rate | 86% | 100% | 63% | 86% | 100% | 96% | - | - |
| mortality | 3% | 7% | 0% | 3% | 3% | 10% | - | - |

Example 6

A mixture of farnesylacetone (mixing ratio:*cis-cis* form/*cis-trans* form and *trans-cis* form/*trans-trans* form=15/50/35), butylhydroxytoluene (antioxidant) and propyleneglycol monostearate (emulsifier) (weight ratio 88:2:10) was added to water at 1 wt% and the mixture was vigorously stirred to give an emulsion liquid. The repellence performance of this emulsion liquid on Acyrthosiphon pisum during favabean growing was evaluated in Experimental Example 7. In addition, the control performance of this emulsion on various pests belonging to Lepidoptera during broccoli growing was evaluated in Experimental Example 8.

Experimental Example 7

Columns (height 2 m) were built at the four corners of a 2 m × 4 m area in a field free of insecticide including the neighboring fields, and insect screens were set all around and the ceiling using the columns to isolate the area from the outside space. The patch in the net room prepared with the insect screens was divided into two equal parts and used as a test section and a control section (each 2 m × 2 m), wherein 4 roots of favabean seedlings were fix planted in both sections. The test section and the control section were not partitioned, and about 500 Acyrthosiphon pisum were released inside of the net room. The emulsion of Example 6 was sprayed on favabean in the test section at a frequency of once every two weeks at 10-50 mL per 1 root every time, according to the growth of favabean. As a result, Acyrthosiphon pisum survived on the top stem foliage and pods of favabean in the control section during the growing period, but Acyrthosiphon pisum was not observed on favabean in the test section throughout the growing period. In addition, drug-induced suffering did not occur in the favabean grown in the test section.

Experimental Example 8

A 10 m × 20 m area in a field free of insecticide including the neighboring fields was divided into two equal parts and used as a test section and a control section. Broccoli seedlings were fix planted and grown in both sections at about 60 cm intervals. The emulsion of Example 6 was sprayed in the test section at a frequency of once every two weeks at about 100 mL per 1 $m^2$ with a spray. As a result, insect damage due to Plutella xylostella larvae, Autographa nigrisigna larvae and Pieris rapae larvae was found on the broccoli leaves during the growing period in the control section, but otherwise for the broccoli leaves in the test section due to these pests. In addition, drug-induced suffering did not occur in the broccoli grown in the test section.

As is clear from the results of Experimental Examples 1-8, farnesylacetone shows a control effect on a wide range of pests. As shown in the results of Experimental Example 1, the repellent effect of the DEET treated wire net bag on Culex pipiens decreases with time, but the repellent effect of the farnesylacetone treated wire net bag on the mosquitoes was maintained at a high level even after 18 hr after the start of the test. As shown in the results of Experimental Example 2, the paper sheet treated with farnesylacetone maintained a Blattella germanica control effect for at least 2 weeks, which indicates that the pest controlling effect of farnesylacetone is maintained for a long time. Moreover, as shown in the results of Experimental Examples 7-8, farnesylacetone does not cause a drug-induced suffering on crops.

Example 7

A dog raised in a dog kennel (vaporization area expanding means), the inside of which was sprayed every week with a 1% solution of farnesylacetone in ethanol with a spray container (reservoir means), and a dog raised in a dog kennel, the inside of which was sprayed every week with ethanol alone, were observed and compared for their behaviors for 30 min every day for one week. The dog raised in the farnesylacetone treated dog kennel scratched its body twice a day, but the dog raised in the dog kennel free of farnesylacetone treatment scratched its body 13 times a day. The concentration of farnesylacetone in the dog kennel was not more than 1 μg/L (detection limit). It is assumed that the fleas parasitic in dogs were repelled and decreased by farnesylacetone.

Example 8

A dispersion phase obtained by dissolving farnesylacetone (2 g) and polyacetate (10 g, manufactured by Cargill Dow LLC, number average molecular weight 87,000, weight average molecular weight 163,300, D/L ratio 8/92) in dichloromethane (100 mL) and a continuous phase consisting of 4% aqueous polyvinyl alcohol solution (1400 mL) and a surfactant (Q12S) (10.4 g) were mixed, stirred at a rate of 100 rpm on a propeller stirrer at 30°C for 30 min The level of reduced. pressure in the reaction vessel was raised stepwisely, and the mixture was stirred for 6 hr under reduced pressure created by an aspirator to evaporate dichloromethane. The obtained suspension was passed through a glass filter, the resultant was washed with water several times, and lyophilized for one day to give a microcapsule including farnesylacetone. The obtained microcapsule was an about spherical particle having an average particle size of 0.4 mm and showed dry flowability similar to the grain of sand.

Example 9

Polyvinyl acetate (5 g) and farnesylacetone (10 g) were dissolved in methanol (300 mL) and porous silica powder (100 g) was added to the solution. Methanol was removed with a rotary evaporator and, after outflow of methanol stopped, the rotary evaporator was operated at 40°C, 20 mmHg for 1 hr, whereby an aggregated silica solid coated with polyvinyl acetate, which contains farnesylacetone inside and surface thereof was prepared. This agglomerate was collected and pulverized, and a small amount of talc was adhered to the surface thereof to give a silica particle retaining farnesylacetone, which had a particle size of not more than 1 mm.

Example 10

By an operation similar to that in Example 9 except that phytone (10 g) was used instead of farnesylacetone (10 g), a silica particle retaining phytone, which had a particle size of not more than 1 mm was obtained.

Example 11

Monodisperse silica particles having an average particle diameter of 0.045 μm (Snowtex OL manufactured by NISSAN CHEMICAL INDUSTRIES, LTD.) were diluted with water to give a slurry (600 g) having a solid content of

17%. Thereto was added polyvinyl alcohol (PVA 117, 2 g, manufactured by KURARAY CO. LTD.) as a binder dissolved in water (20 g) and the mixture was mixed thoroughly. The obtained slurry was spray dried with a spray dryer (L-8, manufactured by.Ohkawarakakouki CO., Ltd.) to give an agglomerate having a particle size of about 20 μm. This was sintered at 450°C for 1 hr to remove the binder to give a porous agglomerate (95 g) made of silica. The solution of phytone (20 g) and ethanol (80 mL) was added into a pear-shaped flask, and the above-mentioned porous agglomerate (80 g) was added. The pear-shaped flask was set on a rotary evaporator and rotated for 5 min at normal pressure. While gradually raising the level of reduced pressure and temperature, ethanol was removed by evaporation to give sand-like silica particles retaining phytone.

Experimental Example 9

The microcapsules obtained in Example 8 or silica particles obtained in Examples 9-11 and quartz sand were uniformly mixed at 1:7 and used as a treatment test sample. In a lower dish of a set of 90 mm diameter glass schale, the treatment test sample was spread on one side and quartz sand was spread on the other side, both in the thickness of about 1 mm, such that an about 5 mm groove was formed in the center, and water was absorbed suitably to give a treatment section and an untreated section. In the treated section and the untreated section were placed 3 sheets each of 8ϕ filter pieces as a feed, and 10 worker Coptotermes formosanus were released on the schale and raised in an incubator at a temperature of 28±2°C, humidity 70%. After a given time, the location of Coptotermes formosanus was observed, if they are on the treated section or the untreated section. This test was repeated three times, and repellence rate was calculated based on the integrated value of the three observation results. The test results are shown in Table 8.

repellence rate = {1-(number of the ants in treated

section/total number of the ants)} × 100 (%)

Table 8

| sample | days of observation | | |
|---|---|---|---|
| | One day later | 2 days later | 4 days later |
| Microcapsule of Example 8 | 87% | 83% | 90% |
| Silica particle of Example 9 | 100% | 100% | 100% |
| Silica particle of Example 10 | 70% | 73% | 83% |
| Silica particle of Example 11 | 100% | 100% | 100% |

Example 12

Farnesylacetone (10 g) was mixed with a soft acrylic resin powder (100 g, product name Parapet SA-N, manufactured by KURARAY CO. LTD.) and the mixture was allowed to blend at room temperature for 15 min The mixture was melt-kneaded in a twin roll kneader at 125°C for 1 min and press-formed at 135°C and 50 kg/cm$^2$ for 1 min to give a 0.5 mm thick soft rubber sheet (corresponding to the reservoir means and the vaporization area expanding means in the present invention). This sheet was cut into 1 cm wide tapes and adhered under a refrigerator and a floor-wall junction in a residence. As a result, cockroaches ceased to appear in a room containing the tape. The room containing this tape had an odor of farnesylacetone, which was smelled particularly after outing, but after getting used to it, the smell was of the level free of any particular problems.

**Industrial Applicability**

According to the method of the present invention, by maintaining the concentration of compound (I) within a particular concentration range in a space where pest repellence is intended, pests can be effectively controlled. Moreover, the agent of the present invention can provide a pest controlling effect on various articles.

This application is based on patent application Nos. 31409/2002 and 34625/2002 filed in Japan, the contents of which are all hereby incorporated by reference.

## Claims

1. A method of controlling a pest, which comprises maintaining a gaseous compound having the formula (I)

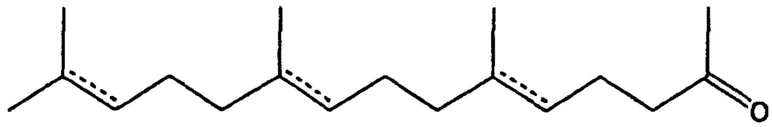

(I)

wherein -------- is a single bond or a double bond,
at a concentration of 0.001-20,000 μg/L in a space where pest repellence is intended.

2. The method of claim 1, wherein the concentration is achieved by vaporizing a compound having the formula (I) by a vaporization enhancing means.

3. The method of claim 1 or 2, wherein the concentration is achieved by vaporizing a compound having the formula (I) by a vaporization area expanding means.

4. The method of claim 2, wherein the vaporization enhancing means is a heating means.

5. The method of claim 2, wherein the vaporization enhancing means is an air blowing means.

6. An apparatus for controlling a pest, which comprises a reservoir means for an agent containing a compound having the following formula (I)

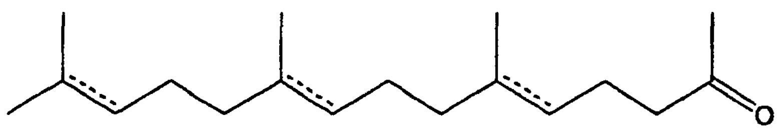

(I)

wherein -------- is a single bond or a double bond, and
a means for enhancing vaporization of the compound having the formula (I).

7. The apparatus of claim 6, further comprising a vaporization area expanding means for the compound having the formula (I).

8. The apparatus of claim 6 or 7, wherein the vaporization enhancing means is a heating means.

9. The apparatus of claim 6 or 7, wherein the vaporization enhancing means is an air blowing means.

10. A pest control agent comprising a compound having the following formula (I)

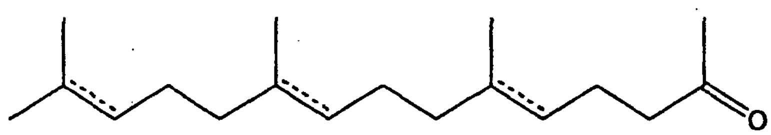

(I)

wherein -------- is a single bond or a double bond,
as an active ingredient.

**INTERNATIONAL SEARCH REPORT**

International application No.
PCT/JP03/01302

A. CLASSIFICATION OF SUBJECT MATTER
Int.Cl[7] A01N25/18, 35/00

According to International Patent Classification (IPC) or to both national classification and IPC

B. FIELDS SEARCHED

Minimum documentation searched (classification system followed by classification symbols)
Int.Cl[7] A01N25/18, 35/00

Documentation searched other than minimum documentation to the extent that such documents are included in the fields searched

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 10-316507 A (Kuraray Co., Ltd.), 02 December, 1998 (02.12.98), Full text (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 April, 2003 (22.04.03) | 20 May, 2003 (20.05.03) |
| Name and mailing address of the ISA/ Japanese Patent Office | Authorized officer |
| Facsimile No. | Telephone No. |

Form PCT/ISA/210 (second sheet) (July 1998)